# EUROPÄISCHE PATENTANMELDUNG

(11) **EP 4 620 747 A1**
(43) Veröffentlichungstag der Anmeldung: **24.09.2025**
(21) Anmeldenummer: 25161389.9
(22) Anmeldetag: 03.03.2025
(51) Int. Cl.: B60S 1/38, B60S 1/52

(54) **SCHEIBENWISCHERVORRICHTUNG ZUM WISCHEN EINER OBERFLACHE EINES FAHREZUGS**

(30) Priorität: 22.03.2024 DE 102024108261
(71) Anmelder: MAN Truck & Bus SE, 80995 München (DE)
(72) Erfinder: Poliak, Slava, 80995 München (DE); Siflinger, Markus, 80995 München (DE); Thalmaier, Michael, 80995 München (DE)

(57) **Zusammenfassung**

Die Erfindung betrifft eine Scheibenwischervorrichtung (100) zum Wischen einer Oberfläche (200) eines Fahrzeugs und ein Fahrzeug, aufweisend die Scheibenwischervorrichtung (100). Die Scheibenwischervorrichtung (100) weist zumindest einen Fluidführungskanal (10, 20), vorzugsweise umfassend einen ersten Fluidführungskanal (10) und einen zweiten Fluidführungskanal (20), auf. Der zumindest eine Fluidführungskanal (10, 20), vorzugsweise der erste Fluidführungskanal (10), weist eine erste Austrittsöffnung (12) zum Ausbringen von Reinigungsfluid aus dem zumindest einen Fluidführungskanal (10, 20) auf die Oberfläche (200) auf. Der zumindest eine Fluidführungskanal (10, 20), vorzugsweise der zweite Fluidführungskanal (20), weist eine zweite Austrittsöffnung (22) zum Ausbringen von Reinigungsfluid aus dem zumindest einen Fluidführungskanal (10, 20) auf die Oberfläche (200) auf, wobei die erste Austrittsöffnung (12) und die zweite Austrittsöffnung (22) in einem Normal-Betriebszustand der Scheibenwischervorrichtung (100) geschlossen sind, vorzugsweise um ein Verstopfen, ein Eindringen von Schmutz und/oder ein Vereisen der ersten Austrittsöffnung (12) und der zweiten Austrittsöffnung (22) zu vermeiden, und/oder die erste Austrittsöffnung (12) und die zweite Austrittsöffnung (22) konfiguriert sind, in einem Reinigungsfluid-Ausbring-Betriebszustand der Scheibenwischervorrichtung (100) durch Druckbeaufschlagung mittels des Reinigungsfluids geöffnet zu werden.

## Beschreibung

Die Erfindung betrifft eine Scheibenwischervorrichtung zum Wischen einer Oberfläche eines Fahrzeugs und ein Fahrzeug, aufweisend die Scheibenwischervorrichtung.

In Fahrzeugen ist es bekannt, die Reinigung von Oberflächen, wie z. B. die Reinigung einer Windschutzscheibe, während der Bewegung eines Scheibenwischers durch das Ausbringen von Reinigungsflüssigkeit zu unterstützen.

In modernen Systemen wird die Reinigungsflüssigkeit dabei durch den Scheibenwischer geführt und z. B. mittels mehrerer längs über den Scheibenwischer verteilter Düsen immer bei einer Aufwärtsbewegung des Scheibenwischers direkt vor den Scheibenwischer auf die zu reinigende Oberfläche gespritzt (sogenannte "one-side-up"-Systeme). In anderen bekannten Systemen wird dagegen immer bei einer Abwärtsbewegung des Scheibenwischers Reinigungsflüssigkeit direkt vor den Scheibenwischer auf die zu reinigende Oberfläche gespritzt (sogenannte "one-side-down"-Systeme).

Nachteilhaft wird dabei allerdings immer nur entweder die Aufwärts- oder die Abwärtsbewegung für das Ausbringen der Reinigungsflüssigkeit genutzt.

Die DE 10 2015 012 610 A1 schlägt in diesem Zusammenhang ein langgestrecktes Wischerblatt vor, das einen schwenkbaren Außenabschnitt aufweist. Bei jedem Richtungswechsel der Wischbewegung klappt der schwenkbare Außenabschnitt auf die in Richtung der Wischbewegung hintere Seite und dichtet eine Austrittsöffnung auf dieser Seite ab. Dann wird durch eine auf einer gegenüberliegenden Seite angeordnete Austrittsöffnung Reinigungsflüssigkeit ausgebracht.

Nachteilhaft an dieser Technik ist aber z. B., dass Schmutz - insbesondere, wenn der Scheibenwischer in Ruheposition ist - in die Austrittsöffnungen eindringen kann, der die Austrittsöffnungen verstopfen und/oder die Fluidführungskomponenten schädigen kann. Ferner kann es bei niedrigen Temperaturen leicht zu einer Vereisung der Austrittsöffnungen kommen. Das Ausbringen der Reinigungsflüssigkeit kann somit beeinträchtigt werden (z. B. durch eine ungewünschte Temperaturabhängigkeit der Ausbringungsmenge der Reinigungsflüssigkeit) oder sogar ganz verhindert werden.

Daher ist es Aufgabe der Erfindung, eine insbesondere verbesserte und/oder alternative Scheibenwischervorrichtung zum Wischen einer Oberfläche eines Fahrzeugs bereitzustellen. Insbesondere ist es z. B. eine Aufgabe der Erfindung, einen verbesserten Schutz der Scheibenwischervorrichtung vor Verschmutzung und/oder äußeren Einwirkungen, wie z. B. Vereisung, zu ermöglichen.

Die Aufgabe wird gelöst durch die Merkmale der unabhängigen Ansprüche. Vorteilhafte Weiterbildungen sind in den abhängigen Ansprüchen und der Beschreibung angegeben.

Eine Grundidee der Erfindung ist insbesondere, dass (z. B. mindestens) eine erste Austrittsöffnung und (z. B. mindestens) eine zweite Austrittsöffnung für Reinigungsfluid grundsätzlich geschlossen sind und nur dann abwechselnd geöffnet werden, wenn eine Bewegung in eine erste Wischrichtung oder eine zweite Wischrichtung erfolgt und z. B., wenn ein ausreichender Druck mittels der Reinigungsflüssigkeit in dem zumindest einen Fluidführungskanal erzeugt wird. Dieser Druck kann z. B. von einer Pumpe der Scheibenwischervorrichtung (und/oder der Waschanlage) kommen.

Gemäß einem ersten allgemeinen Aspekt der Erfindung wird eine Scheibenwischervorrichtung zum Wischen einer Oberfläche eines Fahrzeugs bereitgestellt.

Bei dem Fahrzeug kann es sich z. B. um ein Kraftfahrzeug handeln. Besonders bevorzugt ist das Kraftfahrzeug ein Nutzfahrzeug.

Die Scheibenwischervorrichtung weist zumindest einen Fluidführungskanal auf. Bevorzugt umfasst der zumindest eine Fluidführungskanal einen ersten Fluidführungskanal und einen zweiten Fluidführungskanal.

Der zumindest eine Fluidführungskanal (z. B. der erste Fluidführungskanal) weist (z. B. mindestens) eine (z. B. schlitzförmige und/oder langgezogene und/oder sich über eine Gesamtlänge oder nur einen Teil der Gesamtläge des ersten Fluidführungskanals erstreckende) erste Austrittsöffnung zum Ausbringen von Reinigungsfluid aus dem zumindest einem Fluidführungskanal (z. B. aus dem ersten Fluidführungskanal) auf die Oberfläche auf.

Der zumindest eine Fluidführungskanal (z. B. der zweite Fluidführungskanal) weist (z. B. mindestens) eine (z. B. schlitzförmige und/oder langgezogene und/oder sich über eine Gesamtlänge oder nur einen Teil der Gesamtläge des zweiten Fluidführungskanals erstreckende) zweite Austrittsöffnung zum Ausbringen von Reinigungsfluid aus dem zumindest einem Fluidführungskanal (z. B. aus dem zweiten Fluidführungskanal) auf die Oberfläche auf.

Die erste Austrittsöffnung und die zweite Austrittsöffnung sind in einem Normal-Betriebszustand der Scheibenwischervorrichtung geschlossen (z. B. um ein Verstopfen, ein Eindringen von Schmutz und/oder ein Vereisen der ersten Austrittsöffnung und der zweiten Austrittsöffnung zu vermeiden).

Alternativ oder ergänzend können die erste Austrittsöffnung und die zweite Austrittsöffnung konfiguriert sein, in einem Reinigungsfluid-Ausbring-Betriebszustand der Scheibenwischervorrichtung (z. B. ausschließlich) durch Druckbeaufschlagung mittels des Reinigungsfluids geöffnet zu werden.

Es ist möglich, dass in dem Reinigungsfluid-Ausbring-Betriebszustand der Scheibenwischervorrichtung die erste Austrittsöffnung und die zweite Austrittsöffnung vorzugsweise wechselweise geöffnet und/oder geschlossen werden.

Ein Vorteil kann z. B. darin liegen, dass während des Normal-Betriebszustands ein Verstopfen und/oder Vereisen verhindert werden, insbesondere können ein Eindringen von Schmutz und/oder Eis in die erste Austrittsöffnung und/oder die zweite Austrittsöffnung verhindert werden. In dem Normal-Betriebszustand der Scheibenwischervorrichtung ist es daher denkbar, dass Schmutz und/oder Eis die an der Fluidführung beteiligten Komponenten der Scheibenwischervorrichtung nicht erreichen können. Die an der Fluidführung beteiligten Komponenten sind daher besser vor Verschmutzung und/oder Vereisung geschützt, was sich vorteilhaft z. B. auf die Lebensdauer und/oder Funktionsfähigkeit der Scheibenwischervorrichtung auswirken kann.

Ferner kann eine bessere Reinigungswirkung und/oder höhere Effizienz der Reinigung ermöglicht werden. Es ist denkbar, dass z. B. weniger Wischbewegungen und/oder weniger Reinigungsfluid zur Reinigung der Oberfläche benötigt werden.

Ferner kann somit eine im Wesentlichen konstante Ausbringungsmenge des Reinigungsfluids auch bei unterschiedlichen Temperaturen (z. B. bei Minusgraden im Winter und vergleichsweise hohen Temperaturen im Sommer) erreichbar sein.

Ferner kann in der hierin offenbarten Lösung eine mit nur geringem technischen Aufwand nachrüstbare und/oder kostenreduzierte Lösung gesehen werden.

Der Normal-Betriebszustand kann z. B. einen Betriebszustand der Scheibenwischervorrichtung ohne Wischbewegung und ohne Reinigungsfluidausbringung umfassen. Der Normal-Betriebszustand der Scheibenwischervorrichtung kann ferner z. B. einen Betriebszustand ohne Reinigungsfluidausbringung und mit Wischbewegung (z. B. Trockenwisch-Betriebszustand) umfassen.

Die erste Austrittsöffnung kann z. B. mehrere Austrittsöffnungen umfassen, die in Bezug auf den zumindest einen Fluidführungskanal und/oder eine Wischblattlippe wie hierin offenbart auf einer ersten Seite angeordnet sind.

Die zweite Austrittsöffnung kann z. B. mehrere Austrittsöffnungen umfassen, die in Bezug auf den zumindest einen Fluidführungskanal und/oder eine Wischblattlippe wie hierin offenbart auf einer zweiten Seite angeordnet sind. Die erste und zweite Seite können zueinander entgegengesetzt sein.

Bevorzugt ist die Oberfläche eine Scheibe des Fahrzeugs, besonders bevorzugt eine Windschutzscheibe des Fahrzeugs.

Bevorzugt ist das Reinigungsfluid eine Reinigungsflüssigkeit (z. B. Wasser und/oder eine Reinigungslösung). Grundsätzlich ist aber auch denkbar, dass das Reinigungsfluid z. B. gasförmig ist.

Die erste Austrittsöffnung und die zweite Austrittsöffnung können, wie bereits erwähnt, vorzugsweise konfiguriert sein, in einem Reinigungsfluid-Ausbring-Betriebszustand der Scheibenwischervorrichtung (z. B. ausschließlich) durch Druckbeaufschlagung mittels des Reinigungsfluids geöffnet zu werden.

Gemäß einem Ausführungsbeispiel kann die erste Austrittsöffnung konfiguriert sein, in dem Reinigungsfluid-Ausbring-Betriebszustand der Scheibenwischervorrichtung durch Druckbeaufschlagung, nämlich durch eine Beaufschlagung des zumindest einen Fluidführungskanals (z. B. des ersten Fluidführungskanals) mit dem Reinigungsfluid, geöffnet zu werden. Mit anderen Worten kann der zumindest eine Fluidführungskanal (z. B. der erste Fluidführungskanal) durch eine Förderung von Reinigungsfluid in den zumindest einen Fluidführungskanal (z. B. in den ersten Fluidführungskanal) mit Druck beaufschlagt und die erste Austrittsöffnung dadurch geöffnet werden. Alternativ oder ergänzend kann die zweite Austrittsöffnung konfiguriert sein, in dem Reinigungsfluid-Ausbring-Betriebszustand der Scheibenwischervorrichtung durch Druckbeaufschlagung, nämlich durch eine Beaufschlagung des zumindest einen Fluidführungskanals (z. B. des zweiten Fluidführungskanals) mit dem Reinigungsfluid, geöffnet zu werden. Mit anderen Worten kann der zumindest eine Fluidführungskanal (z. B. der zweite Fluidführungskanal) durch eine Förderung von Reinigungsfluid in den zumindest einen Fluidführungskanal (z. B. in den zweiten Fluidführungskanal) mit Druck beaufschlagt und die zweite Austrittsöffnung dadurch geöffnet werden.

Gemäß einem Ausführungsbeispiel kann der zumindest eine Fluidführungskanal (z. B. der erste Fluidführungskanal) zumindest abschnittsweise durch einen (z. B. elastisch und/oder unter der Druckbeaufschlagung) verformbaren ersten Wandabschnitt begrenzt werden. Der zumindest eine Fluidführungskanal (z. B. der erste Fluidführungskanal) kann ferner durch einen, vorzugsweise elastisch, verformbaren zusätzlichen Wandabschnitt begrenzt werden. Beispielsweise kann der verformbare erste Wandabschnitt (z. B. durch entsprechende Wahl seiner Wandstärke und/oder seines Werkstoffes) derart dimensioniert sein, dass die Verformbarkeit ermöglicht wird.

Alternativ oder ergänzend kann der zumindest eine Fluidführungskanal (z. B. der zweite Fluidführungskanal) zumindest abschnittsweise durch einen (z. B. elastisch und/oder unter der Druckbeaufschlagung) verformbaren zweiten Wandabschnitt begrenzt werden. Der zumindest eine Fluidführungskanal (z. B. der zweite Fluidführungskanal) kann ferner durch einen, vorzugsweise elastisch, verformbaren weiteren Wandabschnitt begrenzt werden. Beispielsweise kann der zweite Wandabschnitt (z. B. durch entsprechende Wahl seiner Wandstärke und/oder seines Werkstoffes) derart dimensioniert sein, dass die Verformbarkeit ermöglicht wird.

Bevorzugt weisen der erste Wandabschnitt und/oder der zweite Wandabschnitt und/oder der zusätzliche Wandabschnitt und/oder der weitere Wandabschnitt ein Kunststoffmaterial (z. B. thermoplastische Elastomere und/oder vernetzte Elastomere, wie beispielsweise Ethylen-Propylen-Dien-(Monomer)-Kautschuk oder Gummi) auf.

Gemäß einem Ausführungsbeispiel kann der erste Wandabschnitt und/oder der zusätzliche Wandabschnitt konfiguriert sein, sich in dem Reinigungsfluid-Ausbring-Betriebszustand der Scheibenwischervorrichtung durch Druckbeaufschlag mittels des Reinigungsfluids so zu verformen, dass die erste Austrittsöffnung geöffnet wird. Z. B. ist denkbar, dass sich der erste Wandabschnitt und/oder der zusätzliche Wandabschnitt dazu radial nach außen biegt und der zumindest eine Fluidführungskanal (z. B. der erste Fluidführungskanal) derart geöffnet wird.

Alternativ oder ergänzend kann der zweite Wandabschnitt und/oder der weitere Wandabschnitt konfiguriert sein, sich in dem Reinigungsfluid-Ausbring-Betriebszustand der Scheibenwischervorrichtung durch Druckbeaufschlag mittels des Reinigungsfluids so zu verformen, dass die zweite Austrittsöffnung geöffnet wird. Z. B. ist denkbar, dass sich der zweite Wandabschnitt und/oder der weitere Wandabschnitt dazu radial nach außen biegt und der zumindest eine Fluidführungskanal (z. B. der zweite Fluidführungskanal) derart geöffnet wird.

Gemäß einem Ausführungsbeispiel kann der erste Wandabschnitt und/oder der zusätzliche Wandabschnitt konfiguriert sein, nach Wegfall der Druckbeaufschlagung mittels des Reinigungsfluids und/oder bei Übergang aus dem Reinigungsfluid-Ausbring-Betriebszustand in einen Trockenwisch-Betriebszustand der Scheibenwischervorrichtung die erste Austrittsöffnung selbsttätig und/oder mittels seiner Eigenelastizität zu schließen. Beispielsweise kann sich der erste Wandabschnitt und/oder der zusätzliche Wandabschnitt dazu wieder radial zurück nach innen biegen.

Alternativ oder ergänzend kann der zweite Wandabschnitt und/oder der weitere Wandabschnitt konfiguriert sein, nach Wegfall der Druckbeaufschlagung mittels des Reinigungsfluids und/oder bei Übergang aus dem Reinigungsfluid-Ausbring-Betriebszustand in einen Trockenwisch-Betriebszustand der Scheibenwischervorrichtung die zweite Austrittsöffnung selbsttätig und/oder mittels seiner Eigenelastizität zu schließen. Beispielsweise kann sich der zweite Wandabschnitt und/oder der weitere Wandabschnitt dazu wieder radial zurück nach innen biegen.

Gemäß einem Ausführungsbeispiel kann die Scheibenwischervorrichtung eine (z. B. elastisch) verformbare und/oder verschwenkbare Wischblattlippe aufweisen. Die Wischblattlippe kann zwischen der ersten Austrittsöffnung und der zweiten Austrittsöffnung angeordnet sein. Die Wischblattlippe kann ein erstes Sperrelement und ein zweites Sperrelement aufweisen. Die Wischblattlippe kann konfiguriert sein (z. B. bei Bewegung, vorzugsweise bei einer Bewegung des Grundkörpers in eine erste Wischrichtung) derart verschwenkt zu werden und/oder sich derart zu verformen, dass das zweite Sperrelement den zweiten Wandabschnitt an einen weiteren Wandabschnitt des zumindest einen Fluidführungskanals (z. B. des zweiten Fluidführungskanals) beaufschlagt (z. B. presst und/oder in Anlage bringt), um die zweite Austrittsöffnung in dem Reinigungsfluid-Ausbring-Betriebszustand der Scheibenwischervorrichtung zu schließen oder geschlossen zu halten.

Alternativ oder ergänzend kann die Wischblattlippe konfiguriert sein (z. B. bei Bewegung, vorzugsweise bei einer Bewegung des Grundkörpers in eine zweite Wischrichtung) derart verschwenkt zu werden und/oder sich derart zu verformen, dass das erste Sperrelement den ersten Wandabschnitt an einen zusätzlichen Wandabschnitt des zumindest einen Fluidführungskanals (z. B. des ersten Fluidführungskanals) beaufschlagt (z. B. presst und/oder in Anlage bringt), um die erste Austrittsöffnung in dem Reinigungsfluid-Ausbring-Betriebszustand der Scheibenwischervorrichtung zu schließen oder geschlossen zu halten.

Beispielsweise umfasst die Wischblattlippe ein (z. B. versiegeltes) Gummimaterial. Die Wischblattlippe kann z. B. vulkanisiert sein.

Schaltventile zur wahlweisen Beaufschlagung des zumindest einen Fluidführungskanals bzw. des ersten Fluidführungskanals und des zweiten Fluidführungskanals können so vorteilhaft entfallen, was den technischen Aufwand weiter reduzieren kann. Ferner kann ein Schließen der ersten Austrittsöffnung und/oder der zweiten Austrittsöffnung beim Richtungswechsel der Wischbewegung vorteilhaft unterstützt werden.

Gemäß einem Ausführungsbeispiel kann das erste Sperrelement als ein (z. B. in Längsrichtung langgezogener und/oder lamellenförmiger) Vorsprung ausgebildet sein. Alternativ oder ergänzend kann das zweite Sperrelement als ein (z. B. in Längsrichtung langgezogener und/oder lamellenförmiger) Vorsprung ausgebildet sein.

Alternativ oder ergänzend kann die Wischblattlippe einen im Wesentlichen t-förmigen und/oder kreuzförmigen Querschnitt aufweisen.

Gemäß einem Ausführungsbeispiel kann die Wischblattlippe einen Befestigungsabschnitt zum (z. B. formschlüssigen) Befestigen der Wischblattlippe aufweisen. Optional kann der Befestigungsabschnitt in einen als Hinterschneidung ausgebildeten Aufnahmeabschnitt des Grundkörpers wie hierin offenbart eingreifen. Ein zweiteiliger Aufbau der Wischblattlippe und des Grundkörpers kann vorteilhaft sein, da die jeweiligen Werkstoffe so noch besser an die jeweilige Funktion anpassbar sein können.

Gemäß einem Ausführungsbeispiel kann die Scheibenwischervorrichtung eine elastisch verformbare Wischblattlippe aufweisen, umfassend einen Befestigungsabschnitt zum (z. B. formschlüssigen) Befestigen der Wischblattlippe, wobei der Befestigungsabschnitt (z. B. ein zwischen der ersten Austrittsöffnung und/oder der zweiten Austrittsöffnung angeordneter, unterer Endbereich des Befestigungsabschnitts) konfiguriert ist, durch Übertragung von Reibungskräften mittels der Wischblattlippe die erste Austrittsöffnung oder die zweite Austrittsöffnung in dem Reinigungsfluid-Ausbring-Betriebszustand der Scheibenwischervorrichtung zu schließen oder geschlossen zu halten.

Gemäß einem Ausführungsbeispiel kann die Wischblattlippe (z. B. zum Ermöglichen der elastischen Verformung) einen verjüngten und/oder materialgeschwächten Profilabschnitt aufweisen. Optional kann der verjüngte Profilabschnitt zwischen dem Befestigungsabschnitt und dem ersten Sperrelement und/oder dem zweiten Sperrelement angeordnet sein (z. B., in einer Hochrichtung des Grundkörpers gesehen, oberhalb des ersten Sperrelements und zweiten Sperrelements). Der Profilabschnitt kann z. B. ein Abschnitt eines Querschnittprofils der Wischblattlippe sein. Die Verformbarkeit der Wischblattlippe kann somit auf technisch einfache Weise durch die Formgebung der Wischblattlippe bereitgestellt werden.

Gemäß einem Ausführungsbeispiel kann die Scheibenwischervorrichtung einen Grundkörper (z. B. zur Montage einer Wischblattlippe) aufweisen. Der Grundkörper kann z. B. ein Wischblattprofil sein. Ferner ist denkbar, dass der Grundkörper einstückig-integral mit der Wischblattlippe wie hierin offenbart ausgebführt ist oder die Wischblattlippe an dem Grundkörper befestigt ist.

Der Grundkörper kann z. B. aus einem extrudierten Kunststoffmaterial bestehen und/oder ein extrudiertes Kunststoffmaterial aufweisen.

Der zumindest eine Fluidführungskanal (z. B. der erste Fluidführungskanal und der zweite Fluidführungskanal) kann sich (z. B. im Wesentlichen parallel zueinander und/oder in Längsrichtung des Grundkörpers) durch den (z. B. gesamten) Grundkörper erstrecken. Die Längsrichtung ist bevorzugt diejenige Raumrichtung, entlang derer der Grundkörper seine größte räumliche Ausdehnung aufweist. Beispielsweise ist denkbar, dass der Grundkörper einen ersten Hohlraum aufweist, der den ersten Fluidführungskanal bildet. Ferner ist denkbar, dass der Grundkörper einen zweiten Hohlraum aufweist, der den zweiten Fluidführungskanal bildet. Dadurch kann der Grundkörper vorteilhaft zur Führung des Reinigungsfluids genutzt werden, was den technischen Aufwand und die Teileanzahl reduzieren kann.

Alternativ oder ergänzend kann die Scheibenwischervorrichtung eine Antriebseinrichtung (z. B. einen Antriebsmotor) aufweisen. Die Antriebseinrichtung kann konfiguriert sein, den Grundkörper (z. B. mittels eines Wischerarms der Scheibenwischervorrichtung) abwechselnd und/oder alternierend und/oder periodisch und/oder wechselseitig in eine erste Wischrichtung und in eine zweite Wischrichtung zu bewegen und/oder zu verschwenken. Beispielsweise können die erste Wischrichtung und die zweite Wischrichtung im Wesentlichen zueinander entgegengesetzt sein. Denkbar ist beispielsweise, dass die erste Wischrichtung eine Aufwärtsbewegung und die zweite Wischrichtung eine Abwärtsbewegung ist. Denkbar ist ferner, dass die erste Wischrichtung eine Querbewegung und die zweite Wischrichtung eine entgegengesetzte Querbewegung ist. Auch Mischformen der vorgenannten Bewegungsarten sind jeweils grundsätzlich denkbar.

Gemäß einem Ausführungsbeispiel kann der erste Wandabschnitt und/oder der zusätzliche Wandabschnitt (z. B. des ersten Fluidführungskanals) konfiguriert sein, sich durch Druckbeaufschlag mittels des Reinigungsfluids so zu verformen, dass Reinigungsfluid in dem Reinigungsfluid-Ausbring-Betriebszustand der Scheibenwischervorrichtung (z. B. zumindest teilweise und/oder zumindest abschnittsweise und/oder mit zumindest einem Richtungsanteil und/oder schräg) in die erste Wischrichtung gelenkt wird (z. B. schräg hin zu der Oberfläche und in die erste Wischrichtung).

Alternativ oder ergänzend kann der zweite Wandabschnitt und/oder der weitere Wandabschnitt (z. B. des zweiten Fluidführungskanals) konfiguriert sein, sich durch Druckbeaufschlag mittels des Reinigungsfluids so zu verformen, dass Reinigungsfluid in dem Reinigungsfluid-Ausbring-Betriebszustand der Scheibenwischervorrichtung (z. B. zumindest teilweise und/oder zumindest abschnittsweise und/oder mit zumindest einem Richtungsanteil und/oder schräg) in die zweite Wischrichtung gelenkt wird (z. B. schräg hin zu der Oberfläche und in die zweite Wischrichtung).

Gemäß einem Ausführungsbeispiel kann die erste Austrittsöffnung konfiguriert sein, in dem Reinigungsfluid-Ausbring-Betriebszustand der Scheibenwischervorrichtung (z. B. ausschließlich) bei einer Bewegung des Grundkörpers in die erste Wischrichtung geöffnet zu werden. Bevorzugt ist die erste Austrittsöffnung an einer der ersten Wischrichtung zugewandten Seite des Grundkörpers angeordnet.

Bevorzugt ist die erste Austrittsöffnung bei einer Bewegung des Grundkörpers in die zweite Wischrichtung geschlossen. Die erste Austrittsöffnung kann z. B. konfiguriert sein, das Reinigungsfluid intermittierend und/oder intervallartig auf die Oberfläche auszubringen.

Alternativ oder ergänzend kann die zweite Austrittsöffnung konfiguriert sein, in dem Reinigungsfluid-Ausbring-Betriebszustand der Scheibenwischervorrichtung (z. B. ausschließlich) bei einer Bewegung des Grundkörpers in die zweite Wischrichtung geöffnet zu werden. Bevorzugt ist die zweite Austrittsöffnung an einer der zweiten Wischrichtung zugewandten Seite des Grundkörpers angeordnet. Bevorzugt ist die zweite Austrittsöffnung bei einer Bewegung des Grundkörpers in die erste Wischrichtung geschlossen. Die zweite Austrittsöffnung kann konfiguriert sein, das Reinigungsfluid intermittierend und/oder intervallartig auf die Oberfläche auszubringen.

Vorteilhaft kann sich z. B. ergeben, dass sowohl die Bewegung in die erste Wischrichtung als auch die Bewegung in die zweite Wischrichtung zum Ausbringen des Reinigungsfluids genutzt werden, was die Reinigungswirkung und/oder die Effizienz der Scheibenwischervorrichtung erhöhen kann. Gleichzeitig kann durch das gezielte Schließen der entsprechenden Austrittsöffnung Reinigungsfluid eingespart werden.

Dadurch kann z. B. die Gefahr eines Verstopfens und/oder Vereisens der ersten Austrittsöffnung und/oder der zweiten Austrittsöffnung weiter reduziert werden.

Gemäß einem Ausführungsbeispiel kann der Normal-Betriebszustand der Scheibenwischervorrichtung einen Trockenwisch-Betriebszustand ohne Reinigungsfluidausbringung, und vorzugsweise mit Wischbewegung, umfassen, wobei die erste Austrittsöffnung und die zweite Austrittsöffnung in dem Trockenwisch-Betriebszustand geschlossen sind, vorzugsweise um ein Verstopfen, ein Eindringen von Schmutz und/oder ein Vereisen der ersten Austrittsöffnung und der zweiten Austrittsöffnung zu vermeiden. Somit kann die Gefahr einer Verschmutzung und/oder einer Vereisung der Scheibenwischervorrichtung auch im Betriebszustand mit Wischbewegung vorteilhaft gemindert werden.

Gemäß einem Ausführungsbeispiel kann die Scheibenwischervorrichtung eine Reinigungsfluid-Speichereinrichtung und eine Pumpeneinrichtung zum Einstellen und/oder Herstellen des Reinigungsfluid-Ausbring-Betriebszustands der Scheibenwischervorrichtung aufweisen. Die Reinigungsfluid-Speichereinrichtung kann ein (z. B. flüssiges) Reinigungsfluid aufweisen. Beispielsweise ist die Reinigungsfluid-Speichereinrichtung ein Reinigungsfluid-Behälter oder ein Reinigungsfluid-Tank.

Die Pumpeneinrichtung kann konfiguriert sein, Reinigungsfluid aus der Reinigungsfluid-Speichereinrichtung in den zumindest einen Fluidführungskanal (z. B. über eine Reinigungsfluid-Zuführleitung) zu fördern und den zumindest einen Fluidführungskanal (z. B. den ersten Fluidführungskanal und/oder den zweiten Fluidführungskanal) dadurch mit Druck zu beaufschlagen.

Gemäß einem Ausführungsbeispiel kann der zumindest eine Fluidführungskanal einen ersten Fluidführungskanal und einen zweiten Fluidführungskanal umfassen. Ferner kann die Scheibenwischervorrichtung ein Verbindungselement aufweisen. Das Verbindungselement kann einen Bypass-Fluidführungskanal aufweisen, der den ersten Fluidführungskanal und den zweiten Fluidführungskanal fluidisch miteinander verbindet. Bevorzugt ist das Verbindungselement eine an einem freien Ende der Scheibenwischervorrichtung und/oder an einem freien Ende des Grundkörpers angeordnete Kappe. Dadurch kann ermöglicht werden, den ersten Fluidführungskanal und den zweiten Fluidführungskanal gemeinsam mit Druck zu beaufschlagen, was z. B. den technischen Aufwand weiter reduzieren kann.

Gemäß einem Ausführungsbeispiel kann das Verbindungselement zumindest eine Öffnung aufweisen, die die Bypass-Fluidführungsleitung fluidisch mit einer Außenumgebung der Scheibenwischervorrichtung verbindet. Bevorzugt kann die zumindest eine Öffnung eine Entlüftungsöffnung und/oder Reinigungsfluid-Ablauföffnung aufweisen. Beispielsweise ist denkbar, dass die Entlüftungsöffnung in einem Normal-Betriebszustand der Scheibenwischervorrichtung ohne Wischbewegung an einem oberen Endbereich des Verbindungselements angeordnet ist. Somit kann vorteilhaft eine Entlüftung des ersten Fluidführungskanals und/oder des zweiten Fluidführungskanals vorgenommen werden.

Ferner ist beispielsweise denkbar, dass die Reinigungsfluid-Ablauföffnung in einem Normal-Betriebszustand (z. B. einer Parkposition) der Scheibenwischervorrichtung ohne Wischbewegung an einem unteren Endbereich des Verbindungselements angeordnet ist. Somit kann Reinigungsfluid in dem Normal-Betriebszustand abfließen.

Gemäß einem Ausführungsbeispiel kann die Scheibenwischervorrichtung zumindest eine der folgenden Komponenten aufweisen:
Eine Federplatte zum Bereitstellen eines Anpressdrucks der Scheibenwischervorrichtung und/oder der Wischblattlippe auf die Oberfläche. Bevorzugt erstreckt sich die Federplatte durch den Grundkörper hindurch. Optional kann die Federplatte in Längsrichtung und zumindest 50%, zumindest 60%, zumindest 70%, zumindest 80%, zumindest 90 oder im Wesentlichen 100% einer Gesamtlänge des Grundkörpers verlaufen. Beispielsweise umfasst die Federplatte ein metallisches Material.

Einen Wischerarm, aufweisend einen ersten Endbereich und einen zweiten Endbereich. An dem ersten Endbereich kann der Grundkörper befestigt sein. Eine Antriebseinrichtung kann trieblich mit dem zweiten Endbereich verbunden sein. Beispielsweise kann die Antriebseinrichtung ausgebildet sein, den Wischerarm - und optional den Grundkörper - periodisch zu verschwenken.

Eine Reinigungsfluid-Zuführleitung. Die Reinigungsfluid-Zuführleitung kann in einem Mittelbereich (z. B. über einen Verbindungsstutzen und/oder ein Anschlussventil) mit dem zumindest einen Fluidführungskanal (z. B. mit dem ersten Fluidführungskanal und/oder dem zweiten Fluidführungskanal) verbunden sein. Alternativ kann die Reinigungsfluid-Zuführleitung an einem freien Ende des Grundkörpers (z. B. über das Verbindungselement wie hierin offenbart) fluidisch mit dem zumindest einen Fluidführungskanal (z. B. mit dem ersten Fluidführungskanal und/oder mit dem zweiten Fluidführungskanal) verbunden sein.

Gemäß einem Ausführungsbeispiel kann der erste Wandabschnitt und/oder der zusätzliche Wandabschnitt (z. B. des ersten Fluidführungskanals) sich im Wesentlichen über eine Gesamtlänge der ersten Austrittsöffnung und/oder über eine Gesamtlänge des Grundkörpers erstrecken.

Alternativ oder ergänzend kann der erste Wandabschnitt und/oder der zusätzliche Wandabschnitt (z. B. des ersten Fluidführungskanals) integral-einstückig mit dem Grundkörper und/oder als zum Grundkörper separates Bauteil ausgebildet sein.

Alternativ oder ergänzend kann der zweite Wandabschnitt und/oder der weitere Wandabschnitt (z. B. des zweiten Fluidführungskanals) sich im Wesentlichen über eine Gesamtlänge der zweiten Austrittsöffnung und/oder über eine Gesamtlänge des Grundkörpers erstrecken.

Alternativ oder ergänzend kann der zweite Wandabschnitt und/oder der weitere Wandabschnitt (z. B. des zweiten Fluidführungskanals) integral-einstückig mit dem Grundkörper und/oder als zum Grundkörper separates Bauteil ausgebildet sein.

Der erste Wandabschnitt erstreckt sich vorzugsweise parallel zu dem zumindest einen Fluidführungskanal. Der zweite Wandabschnitt erstreckt sich vorzugsweise parallel zu dem zumindest einen Fluidführungskanal.

Alternativ oder ergänzend kann die erste Austrittsöffnung und die zweite Austrittsöffnung konfiguriert sein, in dem Reinigungsfluid-Ausbring-Betriebszustand der Scheibenwischervorrichtung durch Druckbeaufschlagung mittels des Reinigungsfluids wechselweise geöffnet und/oder geschlossen zu werden.

Alternativ oder ergänzend weist die erste Austrittsöffnung mehrere (z. B. entlang einer Längsrichtung des Grundkörpers verteilte) Austrittsöffnungen auf, die z. B. jeweils schlitzförmig ausgebildet sind. Die mehreren Austrittsöffnungen der ersten Austrittsöffnung können z. B. in regelmäßigen oder unregelmäßigen Abständen auf einer ersten Seite des Grundkörpers angeordnet sein. Die mehreren Austrittsöffnungen der ersten Austrittsöffnung können z. B. jeweils unterschiedliche Gesamtlängen aufweisen. Mit anderen Worten kann die Gesamtlänge der jeweiligen Austrittsöffnung von Austrittsöffnung zu Austrittsöffnung unterschiedlich sein. Ferner ist denkbar, dass die Länge der jeweiligen schlitzförmigen Austrittsöffnung variabel ist.

Alternativ oder ergänzend weist die zweite Austrittsöffnung mehrere (z. B. entlang einer Längsrichtung des Grundkörpers verteilte) Austrittsöffnungen auf, die z. B. jeweils schlitzförmig ausgebildet sind. Die mehreren Austrittsöffnungen der zweiten Austrittsöffnung können z. B. in regelmäßigen oder unregelmäßigen Abständen auf einer zweiten Seite des Grundkörpers angeordnet sein. Die mehreren Austrittsöffnungen der zweiten Austrittsöffnung können z. B. jeweils unterschiedliche Gesamtlängen aufweisen. Mit anderen Worten kann die Gesamtlänge der jeweiligen Austrittsöffnung von Austrittsöffnung zu Austrittsöffnung unterschiedlich sein. Ferner ist denkbar, dass die Länge der jeweiligen schlitzförmigen Austrittsöffnung variabel ist.

Alternativ oder ergänzend kann die erste Austrittsöffnung und die zweite Austrittsöffnung in Bezug auf die Wischblattlippe auf entgegengesetzten Seiten angeordnet sein.

Gemäß einem zweiten Aspekt wird ein Fahrzeug bereitgestellt. Bevorzugt handelt es sich da bei um ein Kraftfahrzeug. Besonders bevorzugt ist das Kraftfahrzeug ein Nutzfahrzeug. Mit anderen Worten kann es sich um ein Kraftfahrzeug handeln, das zweckmäßig durch seine Bauart und Einrichtung insbesondere zur Beförderung von Personen, zum Transport von Gütern oder zum Ziehen von Anhängerfahrzeugen ausgelegt ist. Beispielsweise kann das Nutzfahrzeug z. B. ein Lastkraftwagen, insbesondere eine Sattelzugmaschine sein.

Das Fahrzeug weist eine Oberfläche auf. Bevorzugt ist die Oberfläche eine Windschutzscheibe.

Das Fahrzeug weist ferner eine Scheibenwischervorrichtung wie hierin offenbart auf.

Die Wischblattlippe wie hierin offenbart kann die Oberfläche (z. B. mit einer Wischblattspitze und/oder Wischblattkante) berühren und/oder kontaktieren.

Die zuvor beschriebenen Ausführungsformen, Varianten und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1A: eine schematische Schnittdarstellung einer Scheibenwischervorrichtung 100 gemäß einem Ausführungsbeispiel der vorliegenden Offenbarung (Normal-Betriebszustand; Wischrichtung W1);
- Figur 1B: eine schematische Schnittdarstellung der Scheibenwischervorrichtung 100 gemäß dem Ausführungsbeispiel aus Figur 1A (Normal-Betriebszustand; Wischrichtung W2);
- Figur 2A: eine schematische Schnittdarstellung der Scheibenwischervorrichtung 100 gemäß dem Ausführungsbeispiel aus Figur 1A (Reinigungsfluid-Ausbring-Betriebszustand; Wischrichtung W1);
- Figur 2B: eine schematische Schnittdarstellung der Scheibenwischervorrichtung 100 gemäß dem Ausführungsbeispiel aus Figur 1A (Reinigungsfluid-Ausbring-Betriebszustand; Wischrichtung W2);
- Figur 3A: eine Teilschnitt-Darstellung einer Scheibenwischervorrichtung 100 gemäß einem Ausführungsbeispiel der vorliegenden Offenbarung;
- Figur 3B: eine Teilschnitt-Darstellung der Scheibenwischervorrichtung 100 aus Figur 3A;
- Figur 4: eine Darstellung einer Scheibenwischervorrichtung 100 gemäß einem Ausführungsbeispiel der vorliegenden Offenbarung;
- Figur 5: eine Darstellung einer Scheibenwischervorrichtung 100 gemäß einem Ausführungsbeispiel der vorliegenden Offenbarung;
- Figuren 6A-B: Darstellungen einer Scheibenwischervorrichtung 100 gemäß einem Ausführungsbeispiel der vorliegenden Offenbarung; und
- Figuren 7A-C: Darstellungen der Scheibenwischervorrichtung 100 aus den Figuren 6A-B.

Die in den Figuren gezeigten Ausführungsbeispiele stimmen zumindest teilweise überein, so dass ähnliche oder identische Teile mit den gleichen Bezugszeichen versehen sind und zu deren Erläuterung auch auf die Beschreibung der anderen Ausführungsbeispiele bzw. Figuren verwiesen wird, um Wiederholungen zu vermeiden.

Zum besseren Verständnis sind in den Figuren teilweise exemplarisch eine Längsrichtung L, eine Breitenrichtung B und eine Hochrichtung H eines Grundkörpers 30 der Scheibenwischervorrichtung 100 eingezeichnet. Die Längsrichtung L ist bevorzugt diejenige Raumrichtung, entlang derer der Grundkörper 30 seine größte räumliche Ausdehnung aufweist. Die Hochrichtung H ist in der Betriebsposition der Scheibenwischervorrichtung 100 bevorzugt eine im Wesentlichen senkrecht zur Oberfläche 200 orientierte Raumrichtung. Die Breitenrichtung B ist bevorzugt senkrecht zur Längsrichtung L und zur Hochrichtung H orientiert.

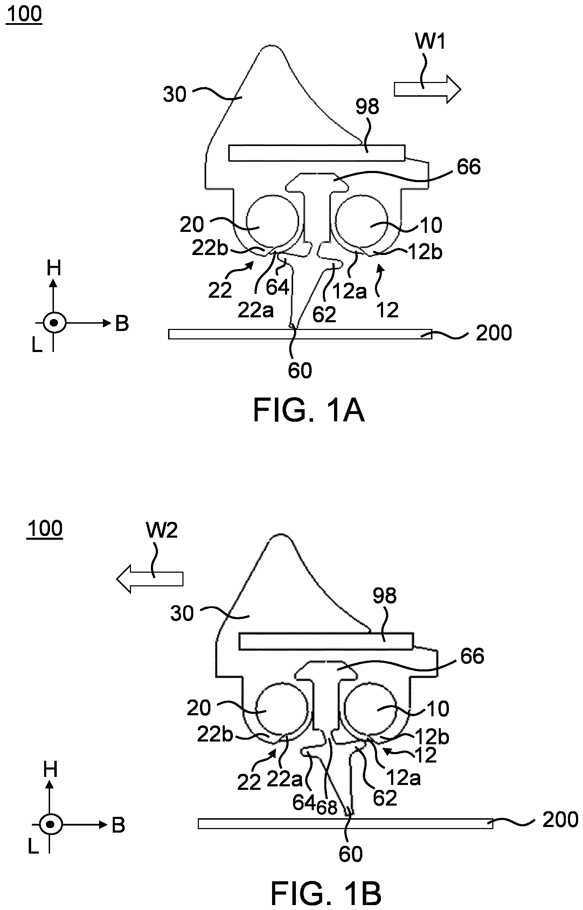

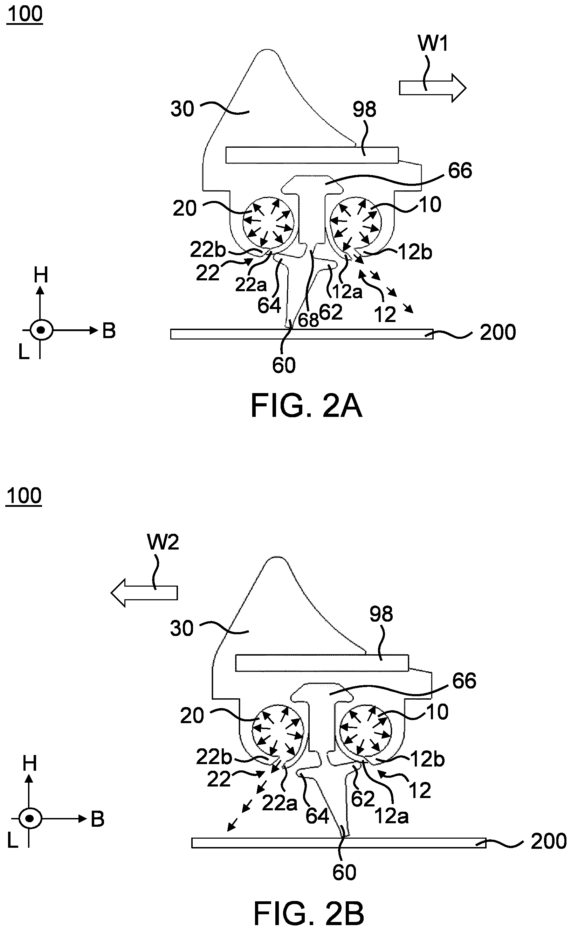

Die Figuren 1A-B und 2A-B zeigen eine Scheibenwischervorrichtung 100 gemäß einer Ausführungsform.

Es handelt sich um eine Scheibenwischervorrichtung 100 zum Wischen einer Oberfläche 200 eines Fahrzeugs. Das Fahrzeug kann z. B. ein Kraftfahrzeug, wie beispielsweise ein Nutzfahrzeug, sein. Bevorzugt ist die Oberfläche 200 eine Windschutzscheibe. Jedoch ist auch jede andere Oberfläche denkbar, z. B. eine Heckscheibe, eine Seitenscheibe, eine Scheibe einer Fahrzeugleuchte, etc..

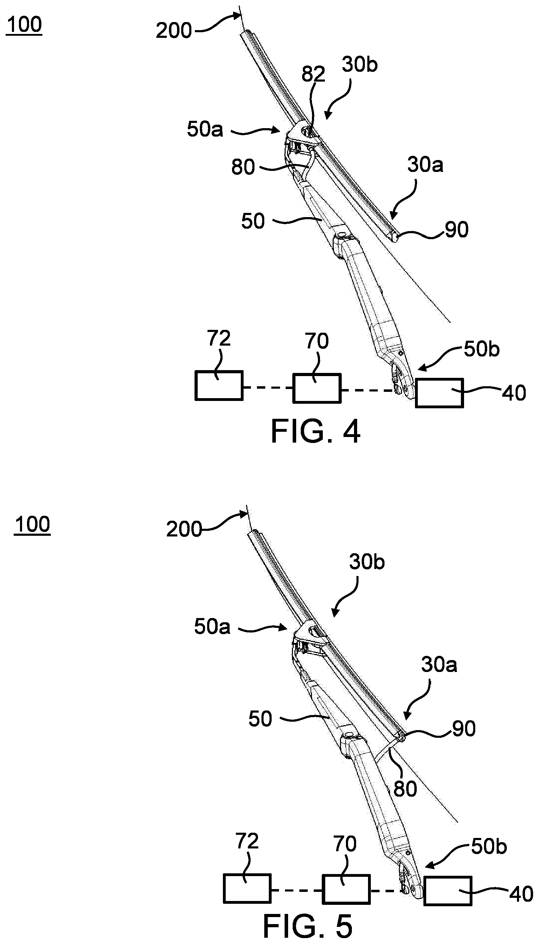

Die Scheibenwischervorrichtung 100 kann den bereits erwähnten Grundkörper 30, eine Wischblattlippe 60, eine Antriebseinrichtung 40 (siehe Figuren 4 und 5), eine Reinigungsfluid-Speichereinrichtung 72 (siehe Figuren 4 und 5) und eine Pumpeneinrichtung 70 (siehe Figuren 4 und 5) aufweisen.

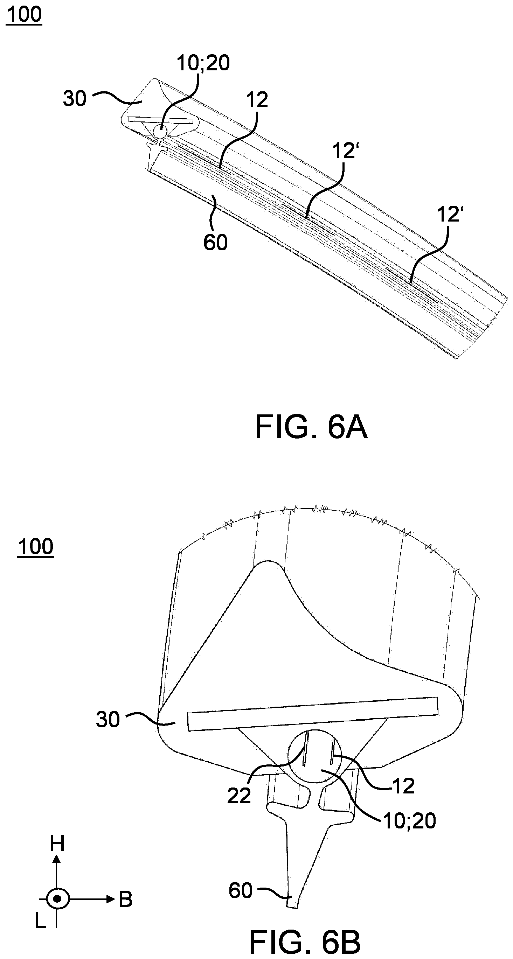

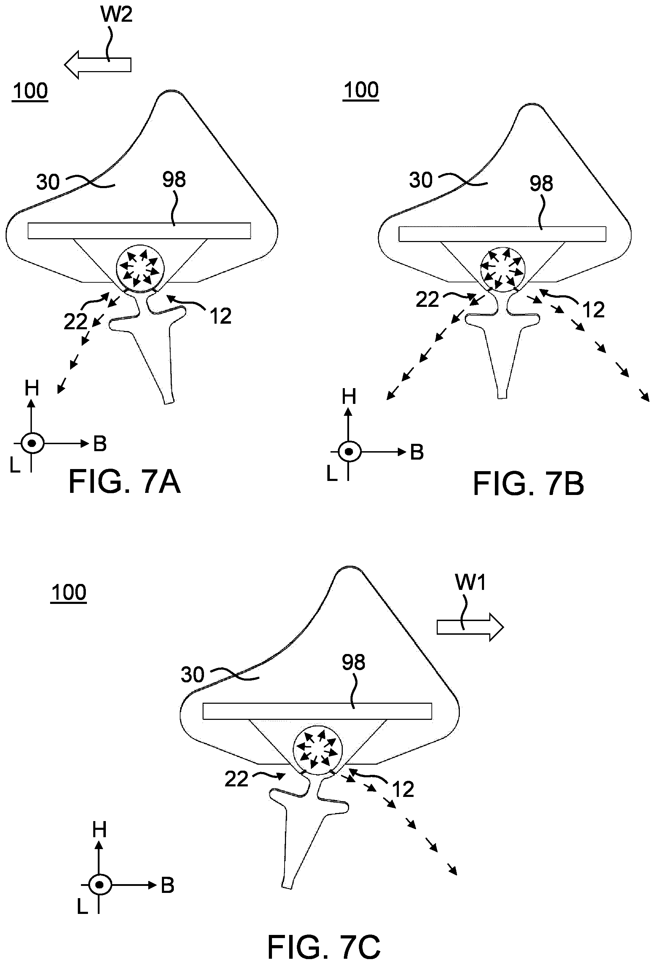

Die Scheibenwischervorrichtung 100 weist ferner zumindest einen Fluidführungskanal 10, 20 auf. Lediglich exemplarisch kann der zumindest eine Fluidführungskanal 10, 20 einen ersten Fluidführungskanal 10 und einen zweiten Fluidführungskanal 20 aufweisen. In den nachfolgend erläuterten Figuren sind jeweils Ausführungsformen mit dem ersten Fluidführungskanal 10 und dem zweiten Fluidführungskanal 20, also mit zwei Fluidführungskanälen 10, 20, gezeigt. Grundsätzlich sind die nachfolgend beschriebenen Merkmale in einer weitere Ausführungsform (siehe z. B. Figuren 6A-B, 7A-C) jeweils auch in Kombination mit nur einem Fluidführungskanal denkbar.

Mittels der Antriebseinrichtung 40 kann der Grundkörper 30 abwechselnd in eine erste Wischrichtung W1 (siehe Figuren 1A, 2A) und in eine zweite Wischrichtung W2 (siehe Figuren 1B, 2B) bewegbar sein. Beispielsweise können die erste Wischrichtung W1 und die zweite Wischrichtung W2 im Wesentlichen zueinander entgegengesetzt sein. Denkbar ist beispielsweise, dass die erste Wischrichtung W1 eine Aufwärtsbewegung und die zweite Wischrichtung W2 eine Abwärtsbewegung ist. Denkbar ist ferner, dass die erste Wischrichtung W1 eine Querbewegung und die zweite Wischrichtung eine entgegengesetzte Querbewegung W2 ist. Grundsätzlich sind aber jeweils auch Mischformen der vorgenannten Bewegungsarten denkbar.

Mittels der Pumpeneinrichtung 70 kann Reinigungsfluid aus der Reinigungsfluid-Speichereinrichtung 72 in den ersten Fluidführungskanal 10 und den zweiten Fluidführungskanal 20 förderbar und/oder pumpbar sein. Denkbar ist z. B., dass der erste Fluidführungskanal 10 und der zweite Fluidführungskanal 20 gemeinsam mit Reinigungsfluid beaufschlagbar sind. Alternativ ist denkbar, dass der erste Fluidführungskanal 10 und der zweite Fluidführungskanal 20 einzeln mit Reinigungsfluid beaufschlagbar sind (z. B. mittels eines Schaltventils). Denkbar ist z. B. aber auch, dass nur ein Fluidführungskanal vorhanden ist, der mittels der Pumpeneinrichtung 70 mit Reinigungsfluid beaufschlagbar ist.

Der erste Fluidführungskanal 10 weist eine (z. B. schlitzförmige) erste Austrittsöffnung 12 zum Ausbringen von Reinigungsfluid aus dem ersten Fluidführungskanal 10 auf die Oberfläche 200 auf.

Auch der zweite Fluidführungskanal 20 weist eine (z. B. schlitzförmige) zweite Austrittsöffnung 22 zum Ausbringen von Reinigungsfluid aus dem zweiten Fluidführungskanal 20 auf die Oberfläche 200 auf.

In einer (hier nicht dargestellten) Ausführungsform kann auch ein einziger Fluidführungskanal die erste Austrittsöffnung 12 und die zweite Austrittsöffnung 22 aufweisen.

Ferner kann die erste Austrittsöffnung 12 mehrere (z. B. entlang einer Längsrichtung des Grundkörpers verteilte) Austrittsöffnungen 12, 12' aufweisen, die z. B. jeweils schlitzförmig ausgebildet sind (siehe z. B. Figur 6A) und/oder auf einer ersten Seite der Wischblattlippe 60 angeordnet sind. Die mehreren Austrittsöffnungen 12, 12' können z. B. jeweils unterschiedliche Gesamtlängen aufweisen.

Auch die zweite Austrittsöffnung 22 kann mehrere (z. B. entlang einer Längsrichtung des Grundkörpers verteilte) Austrittsöffnungen aufweisen, die z. B. jeweils schlitzförmig ausgebildet sind und/oder auf einer zweiten Seite der Wischblattlippe 60 angeordnet sind. Die mehreren Austrittsöffnungen der zweiten Austrittsöffnung 22 können z. B. jeweils unterschiedliche Gesamtlängen aufweisen.

Der erste Fluidführungskanal 10 kann zumindest abschnittsweise durch einen (z. B. elastisch) verformbaren ersten Wandabschnitt 12a und/oder durch einen (z. B. elastisch) verformbaren zusätzlichen Wandabschnitt 12b begrenzt werden. Der zweite Fluidführungskanal 20 kann zumindest abschnittsweise durch einen (z. B. elastisch) verformbaren zweiten Wandabschnitt 22a und/oder durch einen (z. B. elastisch) verformbaren weiteren Wandabschnitt 22b begrenzt werden.

Bevorzugt weisen der erste Wandabschnitt 12a und/oder der zusätzliche Wandabschnitt 12b des ersten Fluidführungskanals 10 und/oder der zweite Wandabschnitt 22a und/oder der weitere Wandabschnitt 22b des zweiten Fluidführungskanals 20 ein Kunststoffmaterial (z. B. thermoplastische Elastomere und/oder vernetzte Elastomere, wie beispielsweise Ethylen-Propylen-Dien-(Monomer)-Kautschuk oder Gummi) auf.

Die Scheibenwischervorrichtung 100 ist in einem Normal-Betriebszustand und einem Reinigungsfluid-Ausbring-Betriebszustand betreibbar.

Die erste Austrittsöffnung 12 und die zweite Austrittsöffnung 22 sind in dem Normal-Betriebszustand der Scheibenwischervorrichtung 100 geschlossen.

Beispielsweise kann der erste Wandabschnitt 12a des ersten Fluidführungskanals 10 dann an einem zusätzlichen Wandabschnitt 12b des ersten Fluidführungskanals 10 anliegen. Ferner kann der zweite Wandabschnitt 22a des zweiten Fluidführungskanals 20 dann an einem weiterem Wandabschnitt 22b des zweiten Fluidführungskanals 20 anliegen.

In einer (hier nicht dargestellten) Ausführungsform ist es aber auch denkbar, dass die Wandabschnitte 12a, 12b, 22a, 22b einem einzigen Fluidführungskanal zugeordnet sind.

Die erste Austrittsöffnung 12 und die zweite Austrittsöffnung 22 sind konfiguriert, in dem Reinigungsfluid-Ausbring-Betriebszustand der Scheibenwischervorrichtung 100 durch Druckbeaufschlagung mittels des Reinigungsfluids geöffnet zu werden. Denkbar ist beispielsweise, dass die erste Austrittsöffnung 12 und die zweite Austrittsöffnung 22 konfiguriert sind, ausschließlich durch Druckbeaufschlagung mittels des Reinigungsfluids geöffnet zu werden. Z. B. kann die Druckbeaufschlagung der ersten Austrittsöffnung 12 mittels einer Beaufschlagung des ersten Fluidführungskanals 10 mit dem Reinigungsfluid vorgenommen werden. Auch die Druckbeaufschlagung der zweiten Austrittsöffnung 22 kann mittels einer Beaufschlagung des zweiten Fluidführungskanals 20 mit dem Reinigungsfluid vorgenommen werden. Dazu kann z. B. die Pumpeneinrichtung 70 Reinigungsfluid in den ersten Fluidführungskanal 10 und den zweiten Fluidführungskanal 20 fördern und/oder pumpen.

In den Figuren 1A-B ist ein Normal-Betriebszustand der Scheibenwischervorrichtung 100 exemplarisch verdeutlicht.

Der Normal-Betriebszustand der Scheibenwischervorrichtung 100 kann z. B. einen Betriebszustand ohne Wischbewegung und ohne Reinigungsfluid-Ausbringung umfassen.

Der Normal-Betriebszustand kann aber z. B. auch einen Betriebszustand mit Wischbewegung der Scheibenwischervorrichtung 100, aber ohne Reinigungsfluid-Ausbringung umfassen (sogenannter Trockenwisch-Betriebszustand).

Ein solcher Trockenwisch-Betriebszustand ist in den Figuren 1A-B exemplarisch gezeigt. Wie in den Figuren exemplarisch ersichtlich ist, sind der erste Fluidführungskanal 10 und der zweite Fluidführungskanal 20 nicht mit Reinigungsfluid und demnach nicht mit Druck beaufschlagt.

Die erste Austrittsöffnung 12 und die zweite Austrittsöffnung 22 sind in diesem Beispiel geschlossen (z. B. um ein Verstopfen, ein Eindringen von Schmutz und/oder ein Vereisen der ersten Austrittsöffnung 12 und der zweiten Austrittsöffnung 22 zu vermeiden).

Dagegen ist in den Figuren 2A-B ein beispielhafter Reinigungsfluid-Ausbring-Betriebszustand der Scheibenwischervorrichtung 100 verdeutlicht. Zum Einstellen und/oder Herstellen des Reinigungsfluid-Ausbring-Betriebszustands fördert die Pumpeneinrichtung 70 exemplarisch Reinigungsfluid in den ersten Fluidführungskanal 10 und den zweiten Fluidführungskanal 20. Dadurch sind der erste Fluidführungskanal 10 und der zweite Fluidführungskanal 20 mit Druck beaufschlagt, der schematisch durch die jeweils radial nach außen gerichteten Pfeilsymbole verdeutlicht ist.

Der erste Wandabschnitt 12a (und/oder der zusätzliche Wandabschnitt 12b) des ersten Fluidführungskanals 10 und der der zweite Wandabschnitt 22a (und/oder der weitere Wandabschnitt 22b) des zweiten Fluidführungskanals 20 sind grundsätzlich konfiguriert, sich in dem Reinigungsfluid-Ausbring-Betriebszustand der Scheibenwischervorrichtung 100 durch Druckbeaufschlag mittels des Reinigungsfluids so zu verformen, dass die erste Austrittsöffnung 12 bzw. die zweite Austrittsöffnung 22 geöffnet wird.

Dann kann Reinigungsfluid aus der jeweils geöffneten Austrittsöffnung 12, 22 austreten und auf die Oberfläche 200 ausgebracht werden.

Das Ausbringen des Reinigungsfluids kann intermittierend bzw. abwechselnd durch die erste Austrittsöffnung 12 und die zweite Austrittsöffnung 22 erfolgen.

Die Länge der schlitzförmigen Austrittsöffnungen kann variabel sein. Sie kann also von Austrittsöffnung zu Austrittsöffnung unterschiedlich sein.

Beispielsweise kann der erste Wandabschnitt 12a und/oder der zusätzliche Wandabschnitt 12b dazu konfiguriert sein, nach Wegfall der Druckbeaufschlagung mittels des Reinigungsfluids und/oder bei Übergang aus dem Reinigungsfluid-Ausbring-Betriebszustand in einen Trockenwisch-Betriebszustand der Scheibenwischervorrichtung 100 die erste Austrittsöffnung 12 selbsttätig und/oder mittels seiner Eigenelastizität zu schließen.

Auch der zweite Wandabschnitt 22a und/oder der weitere Wandabschnitt 22b kann konfiguriert sein, nach Wegfall der Druckbeaufschlagung mittels des Reinigungsfluids und/oder bei Übergang aus dem Reinigungsfluid-Ausbring-Betriebszustand in einen Trockenwisch-Betriebszustand der Scheibenwischervorrichtung 100 die zweite Austrittsöffnung 22 selbsttätig und/oder mittels seiner Eigenelastizität zu schließen.

In der in den Figuren 1A-2B gezeigten Ausführungsform kann das Schließen jedoch auch mittels der Wischblattlippe 60 bewerkstelligt oder unterstütz werden.

Dazu kann die Scheibenwischervorrichtung 100 eine elastisch verformbare und verschwenkbare Wischblattlippe 60 aufweisen, die zwischen der ersten Austrittsöffnung 12 und der zweiten Austrittsöffnung 22 angeordnet ist.

Die Wischblattlippe 60 kann ein erstes Sperrelement 62 und ein zweites Sperrelement 64 aufweisen. Die Wischblattlippe 60 kann konfiguriert sein, bei Bewegung (z. B. bei einer Bewegung des Grundkörpers 30 in eine erste Wischrichtung W1) derart verschwenkt zu werden und sich derart zu verformen, dass das zweite Sperrelement 64 den zweiten Wandabschnitt 22a an einen weiteren Wandabschnitt 22b des zumindest einen Fluidführungskanals 10, 20 (z. B. des zweiten Fluidführungskanals 20) presst, um die zweite Austrittsöffnung 22 in dem Reinigungsfluid-Ausbring-Betriebszustand der Scheibenwischervorrichtung 100 zu schließen oder geschlossen zu halten. Ferner kann die Wischblattlippe 60 konfiguriert sein, bei Bewegung (z. B. bei einer Bewegung des Grundkörpers 30 in eine zweite Wischrichtung W2) derart verschwenkt zu werden und sich derart zu verformen, dass das erste Sperrelement 62 den ersten Wandabschnitt 12a an einen zusätzlichen Wandabschnitt 12b des zumindest einen Fluidführungskanals 10, 20 (z. B. des ersten Fluidführungskanals 10) presst, um die erste Austrittsöffnung 12 in dem Reinigungsfluid-Ausbring-Betriebszustand der Scheibenwischervorrichtung 100 zu schließen oder geschlossen zu halten.

Es ist aber auch denkbar, dass die Scheibenwischervorrichtung 100 eine elastisch verformbare Wischblattlippe 60 aufweist, umfassend einen Befestigungsabschnitt 66 wie hierin offenbart, wobei z. B. ein unterer Endbereich des Befestigungsabschnitts 66 konfiguriert ist, durch Übertragung von Reibungskräften mittels der Wischblattlippe 60 die erste Austrittsöffnung 12 oder die zweite Austrittsöffnung 20 in dem Reinigungsfluid-Ausbring-Betriebszustand der Scheibenwischervorrichtung 100 zu schließen oder geschlossen zu halten.

Die erste Austrittsöffnung 12 kann somit konfiguriert sein, in dem Reinigungsfluid-Ausbring-Betriebszustand der Scheibenwischervorrichtung 100 z. B. ausschließlich bei einer Bewegung des Grundkörpers 30 in die erste Wischrichtung W1 geöffnet zu werden. In diesem Ausführungsbeispiel ist die erste Austrittsöffnung 12 also bei einer Bewegung des Grundkörpers 30 in die zweite Wischrichtung W2 geschlossen. Die erste Austrittsöffnung 12 kann damit z. B. konfiguriert sein, das Reinigungsfluid intermittierend und/oder intervallartig auf die Oberfläche 200 auszubringen.

Auch die zweite Austrittsöffnung 22 kann konfiguriert sein, in dem Reinigungsfluid-Ausbring-Betriebszustand der Scheibenwischervorrichtung 100 z. B. ausschließlich bei einer Bewegung des Grundkörpers 30 in die zweite Wischrichtung W2 geöffnet zu werden. Demnach ist die zweite Austrittsöffnung 22 bei einer Bewegung des Grundkörpers 30 in die erste Wischrichtung W1 geschlossen. Die zweite Austrittsöffnung 22 kann damit konfiguriert sein, das Reinigungsfluid intermittierend und/oder intervallartig auf die Oberfläche 200 auszubringen.

Das erste Sperrelement 62 kann als ein (z. B. in Längsrichtung L langgezogener und/oder lamellenförmiger) Vorsprung ausgebildet ist. Auch das zweite Sperrelement 64 kann optional als ein (z. B. in Längsrichtung L langgezogener und/oder lamellenförmiger) Vorsprung ausgebildet sein.

Um ein Verformen und/oder Verschwenken der Wischblattlippe 60 zu ermöglichen, kann die Wischblattlippe 60 beispielsweise ein (z. B. versiegeltes) Gummimaterial umfassen.

Es ist jedoch auch denkbar, dass die Wischblattlippe 60 zum Ermöglichen der Verformung einen verjüngten und/oder geschwächten Profilabschnitt 68 aufweist (siehe Figuren 1A-B, 2A-B). Optional kann der verjüngte Profilabschnitt 68 zwischen dem Befestigungsabschnitt 66 und dem ersten Sperrelement 62 und/oder dem zweiten Sperrelement 64 angeordnet sein (z. B. in der Hochrichtung H oberhalb des ersten Sperrelements 62 und zweiten Sperrelements 64). Der Profilabschnitt 68 kann z. B. ein Abschnitt eines Querschnittprofils der Wischblattlippe 60 sein.

Die Wischblattlippe 60 kann also (z. B. in einer Schnittebene, die durch die Breitenrichtung B und die Hochrichtung H aufgespannt wird) einen im Wesentlichen t-förmigen und/oder kreuzförmigen Querschnitt aufweisen (siehe Figuren 1A-B, 2A-B).

Ferner kann die Wischblattlippe 60 einen Befestigungsabschnitt 66 zum (z. B. formschlüssigen) Befestigen aufweisen. Optional kann der Befestigungsabschnitt 66 dazu in einen als Hinterschneidung ausgebildeten Aufnahmeabschnitt des Grundkörpers 30 eingreifen. Es ist denkbar, dass der Aufnahmeabschnitt formkorrespondierend zum Befestigungsabschnitt 66 ausgebildet ist.

Der erste Wandabschnitt 12a und/oder der zusätzliche Wandabschnitt 12b kann konfiguriert sein, sich durch Druckbeaufschlag mittels des Reinigungsfluids so zu verformen, dass Reinigungsfluid in dem Reinigungsfluid-Ausbring-Betriebszustand der Scheibenwischervorrichtung 100 in die erste Wischrichtung W1 gelenkt wird (z. B. schräg hin zu der Oberfläche 200 und in die erste Wischrichtung W1).

Auch der zweite Wandabschnitt 22a und/oder der weitere Wandabschnitt 22b kann konfiguriert sein, sich durch Druckbeaufschlag mittels des Reinigungsfluids so zu verformen, dass Reinigungsfluid in dem Reinigungsfluid-Ausbring-Betriebszustand der Scheibenwischervorrichtung 100 in die zweite Wischrichtung W2 gelenkt wird (z. B. schräg hin zu der Oberfläche 200 und in die zweite Wischrichtung W2).

Der erste Wandabschnitt 12a und/oder der zusätzliche Wandabschnitt 12b und/oder der zweite Wandabschnitt 22a und/oder der weitere Wandabschnitt 22b erstrecken sich bevorzugt im Wesentlichen über eine Gesamtlängeder ersten Austrittsöffnung 12 und/oder über eine Gesamtlänge des Grundkörpers 30.

Der erste Wandabschnitt 12a und/oder der zusätzliche Wandabschnitt 12b und/oder der zweite Wandabschnitt 22a und/oder der weitere Wandabschnitt 22b sind bevorzugt integral-einstückig mit dem Grundkörper 30 ausgebildet. Es ist aber auch denkbar, dass erste Wandabschnitt 12a und/oder der zusätzliche Wandabschnitt 12b und/oder der zweite Wandabschnitt 22a und/oder der weitere Wandabschnitt 22b als zum Grundkörper 30 separates Bauteil ausgebildet sind.

Wenn der zumindest eine Fluidführungskanal 10, 20 z. B. zwei Fluidführungskanäle 10, 20 aufweist, können sich der erste Fluidführungskanal 10 und der zweite Fluidführungskanal 20 (z. B. parallel zueinander und/oder in Längsrichtung L des Grundkörpers 30) durch den Grundkörper 30 erstrecken. Beispielsweise ist denkbar, dass der Grundkörper 30 einen ersten Hohlraum aufweist, der den ersten Fluidführungskanal 10 bildet. Ferner ist denkbar, dass der Grundkörper 30 einen zweiten Hohlraum aufweist, der den zweiten Fluidführungskanal 20 bildet. Bevorzugt erstrecken sich der erste Fluidführungskanal 10 und der zweite Fluidführungskanal 20 in Längsrichtung L durch den gesamten Grundkörper 30.

Zum Bereitstellen eines Anpressdrucks der Scheibenwischervorrichtung 100 und/oder der Wischblattlippe 60 auf die Oberfläche 200 kann ferner eine Federplatte 98 vorgesehen sein. Bevorzugt erstreckt sich auch die Federplatte 98 durch den Grundkörper 30 hindurch. Optional kann die Federplatte 98 in Längsrichtung L und zumindest 50%, zumindest 60%, zumindest 70%, zumindest 80%, zumindest 90 oder im Wesentlichen 100% einer Gesamtlänge des Grundkörpers 30 verlaufen. Beispielsweise umfasst die Federplatte 98 ein metallisches Material.

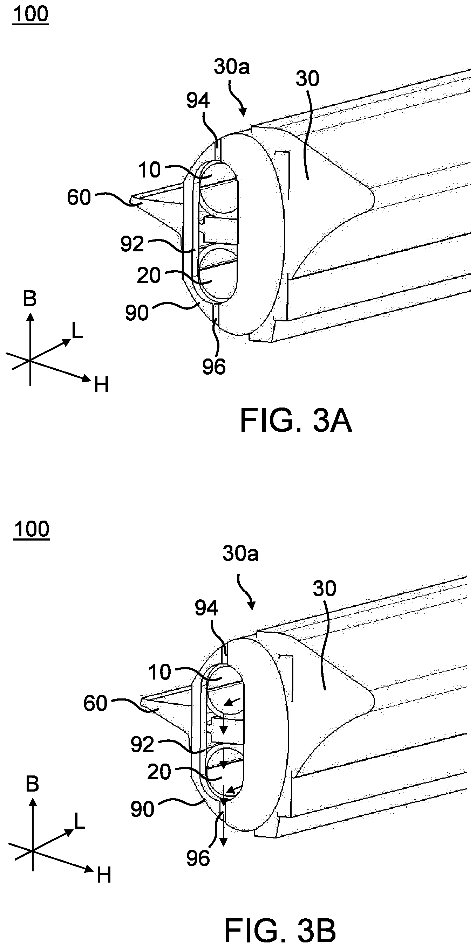

Die Figuren 3A-B zeigen eine Scheibenwischervorrichtung 100 gemäß einer Ausführungsform.

In diesem Ausführungsbeispiel kann der zumindest eine Fluidführungskanal 10, 20 einen ersten Fluidführungskanal 10 und einen zweiten Fluidführungskanal (20) umfassen. Ferner kann die Scheibenwischervorrichtung 100 ein Verbindungselement 90 aufweisen.

Zur besseren Sichtbarkeit ist das Verbindungselement 90 teilweise aufgebrochen dargestellt (Teilschnitt-Darstellung).

Das Verbindungselement 90 kann einen Bypass-Fluidführungskanal 92 aufweisen, der den ersten Fluidführungskanal 10 und den zweiten Fluidführungskanal 20 fluidisch miteinander verbindet. Somit kann z. B. Reinigungsfluid aus dem ersten Fluidführungskanal 10 in den Bypass-Fluidführungskanal 92 und aus dem Bypass-Fluidführungskanal 92 in den zweiten Fluidführungskanal 20 übertreten.

Bevorzugt ist das Verbindungselement 90 eine an einem freien Ende der Scheibenwischervorrichtung 100 angeordnete Kappe. Im gezeigten Ausführungsbeispiel ist das Verbindungselement 90 eine an einem freien Ende 30a des Grundkörpers 30 angeordnete Kappe.

Lediglich exemplarisch kann das Verbindungselement 90 ein Kunststoffmaterial aufweisen.

Das Verbindungselement 90 kann zumindest eine Öffnung 94, 96 aufweisen, die die Bypass-Fluidführungsleitung 92 fluidisch mit einer Außenumgebung der Scheibenwischervorrichtung 100 verbindet. Bevorzugt kann die zumindest eine Öffnung 94, 96 eine Entlüftungsöffnung 94 und/oder Reinigungsfluid-Ablauföffnung 96 aufweisen.

Z. B. um ein Entweichen von Dampf zu ermöglichen, kann die Entlüftungsöffnung 94 in einem Normal-Betriebszustand der Scheibenwischervorrichtung 100 ohne Wischbewegung an einem oberen Endbereich des Verbindungselements 90 angeordnet sein.

Z. B. um ein Abfließen des Reinigungsfluids aus dem ersten Fluidführungskanal 10 und dem zweiten Fluidführungskanal 20 zu ermöglichen (siehe Figur 3B), kann die Reinigungsfluid-Ablauföffnung 96 in einem Normal-Betriebszustand der Scheibenwischervorrichtung 100 ohne Wischbewegung an einem unteren Endbereich des Verbindungselements 90 angeordnet sein.

Die Figuren 4, 5 zeigen eine Scheibenwischervorrichtung 100 gemäß zweier Ausführungsformen.

Die Scheibenwischervorrichtung 100 kann die bereits erwähnte Antriebseinrichtung 40 aufweisen. Die Antriebseinrichtung 40 kann konfiguriert sein, den Grundkörper 30 abwechselnd und/oder alternierend und/oder periodisch und/oder wechselseitig in eine erste Wischrichtung W1 und in eine zweite Wischrichtung W2 zu bewegen und/oder zu verschwenken.

Beispielsweise kann dazu ein Wischerarm 50 vorgesehen sein, der einen ersten Endbereich 50a und einen zweiten Endbereich 50b aufweist. Beispielhaft ist denkbar, dass an dem ersten Endbereich 50a z. B. der Grundkörper 30 befestigt ist. Die Antriebseinrichtung 40 kann trieblich z. B. mit dem zweiten Endbereich 50b verbunden sein. Ferner kann die Antriebseinrichtung z. B. als Antriebsmotor ausgebildet sein, der konfiguriert ist, den Wischerarm 50, und damit den Grundkörper 30, periodisch zu verschwenken.

Gemäß einem Ausführungsbeispiel kann die Scheibenwischervorrichtung 100 eine Reinigungsfluid-Speichereinrichtung 72 und eine Pumpeneinrichtung 70 zum Einstellen und/oder Herstellen des Reinigungsfluid-Ausbring-Betriebszustands der Scheibenwischervorrichtung 100 aufweisen.

Die Reinigungsfluid-Speichereinrichtung 72 ist bevorzugt ein Reinigungsfluid-Tank und/oder Reinigungsfluid-Behälter.

Die Reinigungsfluid-Speichereinrichtung 72 kann ein (z. B. flüssiges) Reinigungsfluid aufweisen.

Bevorzugt ist das Reinigungsfluid eine Reinigungsflüssigkeit. Weiter bevorzugt ist das Reinigungsfluid z. B. Wasser und/oder eine Reinigungslösung (z. B. mit Reinigungs- und/oder Frostschutzzusätzen). Grundsätzlich ist aber auch denkbar, dass das Reinigungsfluid z. B. gasförmig ist.

Die Pumpeneinrichtung 70 kann konfiguriert sein, Reinigungsfluid aus der Reinigungsfluid-Speichereinrichtung 72 in den ersten Fluidführungskanal 10 (z. B. über eine Reinigungsfluid-Zuführleitung 80) zu fördern und den ersten Fluidführungskanal 10 dadurch mit Druck zu beaufschlagen.

Alternativ oder ergänzend kann die Pumpeneinrichtung 70 konfiguriert sein, Reinigungsfluid aus der Reinigungsfluid-Speichereinrichtung 72 in den zweiten Fluidführungskanal 20 (z. B. über eine Reinigungsfluid-Zuführleitung 80) zu fördern und den zweiten Fluidführungskanal 20 dadurch mit Druck zu beaufschlagen.

In einer weiteren (hier nicht dargestellten) Ausführungsform ist es auch denkbar, dass die Pumpeneinrichtung 70 konfiguriert ist, Reinigungsfluid aus der Reinigungsfluid-Speichereinrichtung 72 in nur einen einzigen Fluidführungskanal zu fördern und diesen Fluidführungskanal dadurch mit Druck zu beaufschlagen.

Optional ist die Pumpeneinrichtung 70 konfiguriert, den ersten Fluidführungskanal 10 und den zweiten Fluidführungskanal 20 gleichzeitig mit Reinigungsfluid zu beaufschlagen. Grundsätzlich ist aber auch denkbar, dass die Scheibenwischervorrichtung 100 z. B. ein Steuerventil aufweist, das zwischen der Pumpeneinrichtung 70 und dem ersten Fluidführungskanal 10 und dem zweiten Fluidführungskanal 20 angeordnet ist. Das Steuerventil kann z. B. ausgebildet sein, wahlweise eine Fluidverbindung zwischen der Pumpeneinrichtung 70 und dem ersten Fluidführungskanal 10 sowie zwischen der Pumpeneinrichtung 70 und dem zweiten Fluidführungskanal 20 herzustellen.

Zur fluidischen Verbindung des ersten Fluidzuführkanals 10 und/oder des zweiten Fluidzuführkanals 20 mit der Pumpeneinrichtung 70 kann eine Reinigungsfluid-Zuführleitung 80 vorgesehen sein.

Die Reinigungsfluid-Zuführleitung 80 kann lediglich exemplarisch in einem Mittelbereich 30b (z. B. über einen Verbindungsstutzen und/oder ein Anschlussventil 82) mit dem zumindest einen Fluidführungskanal 10, 20 (z. B. mit dem ersten Fluidführungskanal 10 und/oder dem zweiten Fluidführungskanal 20) verbunden sein.

Es ist aber beispielsweise auch denkbar, dass die Reinigungsfluid-Zuführleitung an einem freien Ende 30a des Grundkörpers 30 (z. B. über das Verbindungselement 90) fluidisch mit dem zumindest einen Fluidführungskanal 10, 20 (z. B. mit dem ersten Fluidführungskanal 10 und/oder dem zweiten Fluidführungskanal 20) verbunden ist.

Die Figuren 6A-B und 7A-C zeigen eine Scheibenwischervorrichtung 100 gemäß einer Ausführungsform.

In dieser Ausführungsform kann die Scheibenwischervorrichtung 100 nur einen einzigen Fluidführungskanal 10; 20 aufweisen. Es ist denkbar, dass der Fluidführungskanal 10; 20 die erste Austrittsöffnung 12 und die zweite Austrittsöffnung 22 aufweist.

Ferner ist denkbar, dass der Fluidführungskanal 10; 20 zumindest eine, vorzugsweise mehrere, zusätzliche Austrittsöffnungen 12' aufweist, die auf der Seite der ersten Austrittsöffnung 12 angeordnet sind. Die zusätzlichen Austrittsöffnungen 12' können dabei grundsätzlich entsprechend der ersten Austrittsöffnung 12 konfiguriert sein. Ferner ist denkbar, dass der Fluidführungskanal 10; 20 zumindest eine, vorzugsweise mehrere, zusätzliche Austrittsöffnungen aufweist, die auf der Seite der zweiten Austrittsöffnung 22 angeordnet sind. Die zusätzlichen Austrittsöffnungen können dabei grundsätzlich entsprechend der zweiten Austrittsöffnung 22 konfiguriert sein.

Beispielsweise ist denkbar, dass bei einer Bewegung in die zweite Wischrichtung W2 (siehe Figur 7A) eine (z. B. rechte) Seite des Grundkörpers 30 und/oder des Wischerblatts 60 gespannt und die gegenüberliegende (z. B. linke) Seite entspannt wird, wodurch der Innendruck des Reinigungsfluids die auf der (z. B. linken) Seite der zweiten Austrittsöffnung 22 angeordneten Austrittsöffnungen öffnen kann.

Am Umkehrpunkt von der zweiten Wischrichtung W2 in die erste Wischrichtung W1 (siehe Figur 7B) ist es denkbar, dass (z. B. zumindest kurzzeitig) eine beidseitige Reinigungsfluid-Abgabe ermöglicht wird.

Ferner ist denkbar, dass bei einer Bewegung in die erste Wischrichtung W1 (siehe Figur 7C) die gegenüberliegende (z. B. linke) Seite des Grundkörpers 30 und/oder des Wischerblatts 60 gespannt und die (z. B. rechte) Seite entspannt wird, wodurch der Innendruck des Reinigungsfluids die auf der (z. B. rechten) Seite der ersten Austrittsöffnung 12 angeordneten Austrittsöffnungen 12, 12' öffnen kann.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: erster Fluidführungskanal
- 12: erste Austrittsöffnung
- 12a: erster Wandabschnitt
- 12b: zusätzlicher Wandabschnitt
- 12': zusätzliche Austrittsöffnungen
- 20: zweiter Fluidführungskanal
- 22: zweite Austrittsöffnung
- 22a: zweiter Wandabschnitt
- 22b: weiterer Wandabschnitt
- 22': weitere Austrittsöffnungen
- 30: Grundkörper
- 30a: freies Ende des Grundkörpers
- 30b: Mittelbereich
- 40: Antriebseinrichtung
- 50: Wischerarm
- 50a: erster Endbereich
- 50b: zweiter Endbereich
- 60: Wischblattlippe
- 62: erstes Sperrelement
- 64: zweites Sperrelement
- 66: Befestigungsabschnitt
- 68: verjüngter Profilabschnitt
- 70: Pumpeneinrichtung
- 72: Reinigungsfluid-Speichereinrichtung
- 80: Reinigungsfluid-Zuführleitung
- 82: Anschlussventil
- 90: Verbindungselement
- 92: Bypass-Fluidführungskanal
- 94: Entlüftungsöffnung
- 96: Reinigungsfluid-Ablauföffnung
- 98: Federplatte
- 100: Scheibenwischervorrichtung
- 200: Oberfläche
- H: Hochrichtung
- L: Längsrichtung
- W1: erste Wischrichtung
- W2: zweite Wischrichtung

## Patentansprüche

1. Scheibenwischervorrichtung (100) zum Wischen einer Oberfläche (200) eines Fahrzeugs, vorzugsweise eines Kraftfahrzeugs, aufweisend:
zumindest einen Fluidführungskanal (10, 20), vorzugsweise umfassend einen ersten Fluidführungskanal (10) und einen zweiten Fluidführungskanal (20), wobei
der zumindest eine Fluidführungskanal (10, 20), vorzugsweise der erste Fluidführungskanal (10), eine erste Austrittsöffnung (12) zum Ausbringen von Reinigungsfluid aus dem zumindest einen Fluidführungskanal (10, 20) auf die Oberfläche (200) aufweist; und wobei
der zumindest eine Fluidführungskanal (10, 20), vorzugsweise der zweite Fluidführungskanal (20), eine zweite Austrittsöffnung (22) zum Ausbringen von Reinigungsfluid aus dem zumindest einen Fluidführungskanal (10, 20) auf die Oberfläche (200) aufweist, wobei
- die erste Austrittsöffnung (12) und die zweite Austrittsöffnung (22) in einem Normal-Betriebszustand der Scheibenwischervorrichtung (100) geschlossen sind, vorzugsweise um ein Verstopfen, ein Eindringen von Schmutz und/oder ein Vereisen der ersten Austrittsöffnung (12) und der zweiten Austrittsöffnung (22) zu vermeiden, und/oder
- die erste Austrittsöffnung (12) und die zweite Austrittsöffnung (22) konfiguriert sind, in einem Reinigungsfluid-Ausbring-Betriebszustand der Scheibenwischervorrichtung (100) durch Druckbeaufschlagung mittels des Reinigungsfluids geöffnet zu werden.

2. Scheibenwischervorrichtung (100) nach Anspruch 1, wobei
der zumindest eine Fluidführungskanal (10, 20), vorzugsweise der erste Fluidführungskanal (10), zumindest abschnittsweise durch einen, vorzugsweise elastisch, verformbaren ersten Wandabschnitt (12a) und/oder durch einen, vorzugsweise elastisch, verformbaren zusätzlichen Wandabschnitt (12b) begrenzt wird; und/oder
der zumindest eine Fluidführungskanal (10, 20), vorzugsweise der zweite Fluidführungskanal (20), zumindest abschnittsweise durch einen, vorzugsweise elastisch, verformbaren zweiten Wandabschnitt (22a) und/oder durch einen, vorzugsweise elastisch, verformbaren weiteren Wandabschnitt (22b) begrenzt wird.

3. Scheibenwischervorrichtung (100) nach Anspruch 2, wobei
der erste Wandabschnitt (12a) und/oder der zusätzliche Wandabschnitt (12b) konfiguriert ist, sich in dem Reinigungsfluid-Ausbring-Betriebszustand der Scheibenwischervorrichtung (100) durch Druckbeaufschlag mittels des Reinigungsfluids so zu verformen, dass die erste Austrittsöffnung (12) geöffnet wird; und/oder
der zweite Wandabschnitt (22a) und/oder der weitere Wandabschnitt (22b) konfiguriert ist, sich in dem Reinigungsfluid-Ausbring-Betriebszustand der Scheibenwischervorrichtung (100) durch Druckbeaufschlag mittels des Reinigungsfluids so zu verformen, dass die zweite Austrittsöffnung (22) geöffnet wird.

4. Scheibenwischervorrichtung (100) nach einem der Ansprüche 2 oder 3, wobei
der erste Wandabschnitt (12a) und/oder der zusätzliche Wandabschnitt (12b) konfiguriert ist, nach Wegfall der Druckbeaufschlagung mittels des Reinigungsfluids die erste Austrittsöffnung (12) selbsttätig und/oder mittels seiner Eigenelastizität zu schließen; und/oder
der zweite Wandabschnitt (22a) und/oder der weitere Wandabschnitt (22b) konfiguriert ist, nach Wegfall der Druckbeaufschlagung mittels des Reinigungsfluids die zweite Austrittsöffnung (22) selbsttätig und/oder mittels seiner Eigenelastizität zu schließen.

5. Scheibenwischervorrichtung (100) nach einem der Ansprüche 2 bis 4, aufweisend:
eine verschwenkbare Wischblattlippe (60), die zwischen der ersten Austrittsöffnung (12) und der zweiten Austrittsöffnung (22) angeordnet ist, wobei die Wischblattlippe (60) ein erstes Sperrelement (62) und ein zweites Sperrelement (64) aufweist, wobei die Wischblattlippe (60) konfiguriert ist:
derart verschwenkt zu werden, dass das zweite Sperrelement (64) den zweiten Wandabschnitt (22a) an einen weiteren Wandabschnitt (22b) des zumindest einen Fluidführungskanals (10, 20) beaufschlagt, um die zweite Austrittsöffnung (22) in dem Reinigungsfluid-Ausbring-Betriebszustand der Scheibenwischervorrichtung (100) zu schließen oder geschlossen zu halten; und/oder
derart verschwenkt zu werden, dass das erste Sperrelement (62) den ersten Wandabschnitt (12a) an einen zusätzlichen Wandabschnitt (12b) des zumindest einen Fluidführungskanals (10, 20) beaufschlagt, um die erste Austrittsöffnung (12) in dem Reinigungsfluid-Ausbring-Betriebszustand der Scheibenwischervorrichtung (100) zu schließen oder geschlossen zu halten.

6. Scheibenwischervorrichtung (100) nach einem der vorhergehenden Ansprüche, wobei die Scheibenwischervorrichtung (100) eine elastisch verformbare Wischblattlippe (60) aufweist, umfassend einen Befestigungsabschnitt (66) zum Befestigen der Wischblattlippe (60), wobei der Befestigungsabschnitt (66), vorzugsweise ein unterer Endbereich des Befestigungsabschnitts (66), konfiguriert ist, durch Übertragung von Reibungskräften mittels der Wischblattlippe (60) die erste Austrittsöffnung (12) oder die zweite Austrittsöffnung (20) in dem Reinigungsfluid-Ausbring-Betriebszustand der Scheibenwischervorrichtung (100) zu schließen oder geschlossen zu halten.

7. Scheibenwischervorrichtung (100) nach einem der vorhergehenden Ansprüche, aufweisend:
einen Grundkörper (30), vorzugsweise zur Montage einer Wischblattlippe (60), durch den sich der erste zumindest eine Fluidführungskanal (10, 20), vorzugsweise in Längsrichtung (L) des Grundkörpers (30), erstreckt; und/oder
eine Antriebseinrichtung (40), die konfiguriert ist, den Grundkörper (30), vorzugsweise mittels eines Wischerarms (50) der Scheibenwischervorrichtung (100), abwechselnd in eine erste Wischrichtung (W1) und in eine zweite Wischrichtung (W2) zu bewegen, vorzugsweise wobei die erste Wischrichtung (W1) und die zweite Wischrichtung (W2) zueinander entgegengesetzt sind.

8. Scheibenwischervorrichtung (100) nach Anspruch 7, wobei
der erste Wandabschnitt (12a) und/oder der zusätzliche Wandabschnitt (12b) konfiguriert ist, sich durch Druckbeaufschlag mittels des Reinigungsfluids so zu verformen, dass Reinigungsfluid in dem Reinigungsfluid-Ausbring-Betriebszustand der Scheibenwischervorrichtung (100) zumindest abschnittsweise in die erste Wischrichtung (W1) gelenkt wird; und/oder
der zweite Wandabschnitt (22a) und/oder der weitere Wandabschnitt (22b) konfiguriert ist, sich durch Druckbeaufschlag mittels des Reinigungsfluids so zu verformen, dass Reinigungsfluid in dem Reinigungsfluid-Ausbring-Betriebszustand der Scheibenwischervorrichtung (100) zumindest abschnittsweise in die zweite Wischrichtung (W2) gelenkt wird.

9. Scheibenwischervorrichtung (100) nach einem der vorhergehenden Ansprüche, wobei der Normal-Betriebszustand der Scheibenwischervorrichtung (100) einen Trockenwisch-Betriebszustand ohne Reinigungsfluidausbringung umfasst, wobei die erste Austrittsöffnung (12) und die zweite Austrittsöffnung (22) in dem Trockenwisch-Betriebszustand geschlossen sind.

10. Scheibenwischervorrichtung (100) nach einem der vorhergehenden Ansprüche, aufweisend:
eine Reinigungsfluid-Speichereinrichtung (72) aufweisend ein, vorzugsweise flüssiges, Reinigungsfluid; und
eine Pumpeneinrichtung (70) zum Einstellen des Reinigungsfluid-Ausbring-Betriebszustands der Scheibenwischervorrichtung (100), wobei die Pumpeneinrichtung (70) konfiguriert ist:
Reinigungsfluid aus der Reinigungsfluid-Speichereinrichtung (72) in den zumindest einen Fluidführungskanal (10, 20), vorzugsweise über eine Reinigungsfluid-Zuführleitung (80), zu fördern und den zumindest einen Fluidführungskanal (10, 20) dadurch mit Druck zu beaufschlagen.

11. Scheibenwischervorrichtung (100) nach einem der vorhergehenden Ansprüche, wobei der zumindest eine Fluidführungskanal (10, 20) einen ersten Fluidführungskanal (10) und einen zweiten Fluidführungskanal (20) umfasst, wobei die Scheibenwischervorrichtung (100) ein Verbindungselement (90) aufweist, vorzugsweise eine an einem freien Ende der Scheibenwischervorrichtung (100) und/oder an einem freien Ende (30a) des Grundkörpers (30) angeordnete Kappe, wobei das Verbindungselement (90) einen Bypass-Fluidführungskanal (92) aufweist, der den ersten Fluidführungskanal (10) und den zweiten Fluidführungskanal (20) fluidisch miteinander verbindet.

12. Scheibenwischervorrichtung (100) nach Anspruch 11, wobei das Verbindungselement (90) zumindest eine Öffnung (94, 96) aufweist, die die Bypass-Fluidführungsleitung (92) fluidisch mit einer Außenumgebung der Scheibenwischervorrichtung (100) verbindet, vorzugsweise wobei die zumindest eine Öffnung (94, 96) eine Entlüftungsöffnung (94) und/oder Reinigungsfluid-Ablauföffnung (96) aufweist.

13. Scheibenwischervorrichtung (100) nach einem der vorhergehenden Ansprüche, aufweisend zumindest eine der folgenden Komponenten:
eine Federplatte (98) zum Bereitstellen eines Anpressdrucks der Scheibenwischervorrichtung (100) und/oder der Wischblattlippe (60) auf die Oberfläche (200), vorzugsweise wobei die Federplatte (98) in Längsrichtung (L) durch den Grundkörper (30) und zumindest 50%, zumindest 60%, zumindest 70%, zumindest 80%, zumindest 90 oder im Wesentlichen 100% einer Gesamtlänge des Grundkörpers (30) verläuft;
einen Wischerarm (50), aufweisend einen ersten Endbereich (50a) und einen zweiten Endbereich (50b), wobei an dem ersten Endbereich (50a) der Grundkörper (30) befestigt ist und eine Antriebseinrichtung (40) trieblich mit dem zweiten Endbereich (50b) verbunden ist; und
eine Reinigungsfluid-Zuführleitung (80), die in einem Mittelbereich (30b) oder an einem freien Ende (30a) des Grundkörpers (30), vorzugsweise über das Verbindungselement (90), fluidisch mit dem zumindest einen Fluidführungskanal (10, 20) verbunden ist.

14. Scheibenwischervorrichtung (100) nach einem der Ansprüche 2 bis 13, wobei:
der erste Wandabschnitt (12a) und/oder der zusätzliche Wandabschnitt (12b) sich im Wesentlichen über eine Gesamtlänge der ersten Austrittsöffnung (12) und/oder über eine Gesamtlänge des Grundkörpers (30) erstreckt;
der erste Wandabschnitt (12a) und/oder der zusätzliche Wandabschnitt (12b) integral-einstückig mit dem Grundkörper (30) und/oder als zum Grundkörper (30) separates Bauteil ausgebildet ist; und/oder
der zweite Wandabschnitt (22a) und/oder der weitere Wandabschnitt (22b) sich im Wesentlichen über eine Gesamtlänge der zweiten Austrittsöffnung (22) erstreckt und/oder über eine Gesamtlänge des Grundkörpers (30) erstreckt; und/oder
der zweite Wandabschnitt (22a) und/oder weitere Wandabschnitt (22b) integral-einstückig mit dem Grundkörper (30) ) und/oder als zum Grundkörper (30) separates Bauteil ausgebildet ist; und/oder
die erste Austrittsöffnung (12) und die zweite Austrittsöffnung (22) konfiguriert sind, in dem Reinigungsfluid-Ausbring-Betriebszustand der Scheibenwischervorrichtung (100) durch Druckbeaufschlagung mittels des Reinigungsfluids wechselweise geöffnet und/oder geschlossen zu werden; und/oder
die erste Austrittsöffnung (12) mehrere Austrittsöffnungen (12, 12') umfasst, die vorzugsweise jeweils schlitzförmig ausgebildet sind; und/oder
die zweite Austrittsöffnung (22) mehrere Austrittsöffnungen (22) umfasst, die vorzugsweise jeweils schlitzförmig ausgebildet sind; und/oder
die erste Austrittsöffnung (12) und die zweite Austrittsöffnung (22) in Bezug auf die Wischblattlippe (60) auf entgegengesetzten Seiten angeordnet sind.

15. Fahrzeug, vorzugsweise Kraftfahrzeug, weiter vorzugsweise Nutzfahrzeug, aufweisend:
eine Oberfläche (200), vorzugsweise eine Windschutzscheibe;
eine Scheibenwischervorrichtung (100) nach einem der vorhergehenden Ansprüche.
